# EUROPEAN PATENT APPLICATION

(11) **EP 4 687 088 A1**
(43) Date of publication of application: **04.02.2026**
(21) Application number: 24191491.0
(22) Date of filing: 29.07.2024
(51) Int. Cl.: G06Q 20/06, G06Q 20/36

(54) **SECURED MONETARY VALUE TOKEN WALLET**

(71) Applicant: Giesecke+Devrient advance52 GmbH, 81677 München (DE)
(72) Inventor: Gibis, Oliver, 81677 München (DE); Seidemann, Wolfram, 81677 München (DE)
(74) Representative: Giesecke+Devrient IP

(57) **Abstract**

Secured monetary value token wallet (1) for a monetary value token transaction system,
wherein the secured monetary token value wallet (1) is adapted to receive (101) a monetary value token (21; 21a) from a user wallet (2; 2a) of the monetary value token transaction system in an offline transaction and to store the monetary value token (21; 21a);
wherein the secured monetary token value wallet (1) is adapted to store transaction information for the offline transaction in a transaction information history (17); and
wherein the secured monetary token value wallet (1) is adapted to redeem (102) the received monetary value token.

The secured monetary value token wallet (1) is limited to using the received monetary value token by either redeeming the received monetary value token or sending the received monetary value token (21; 21a) or a monetary token (21b) derived therefrom to only selected user wallets (2; 2b), wherein the selected user wallets (2; 2b) are stored in the transaction information history (17).

## Description

The invention relates to a secured monetary value wallet of a monetary value token system.

In the field of digital money systems, including digital currency systems, account-based systems and token-based systems form well known different approaches.

Many of the recent account-based systems use blockchains, wherein ownership of the digital money is transferred within the blockchain, e.g. by changing the assignment from one account to another account.

In token-based digital money systems typically a monetary value token is transferred between secure transaction units. For example EP 3 671514 B1, WO 2020/212331 A1, WO 2021/170646 A1, WO 2023/011758 A1 and WO 2023/011761 A1 disclose different aspects of such systems. Monetary value tokens typically can be used offline and online. However, digital currency systems were proposed comprising either separate modes, an online mode and an offline mode, and/or even separate sub-systems, an online subsystem and an offline-subsystem.

A holding limit for wallets of the digital money system may exist. The holding limit defines the maximum monetary value a wallet may hold, e.g. in the form of monetary value tokens stored in the wallet or in the form of an account balance. In recent discussions, e.g. in the cases of dynamic limits, separate online and offline sub-systems or for special purpose wallets, the management of the holding limit turned out to be complex.

According to an object of the invention a secured monetary value token wallet shall be provided which improves security, preferably with remaining or increased flexibility and/or with remaining or decreased management effort, particularly in an offline scenario.

The above-identified objectives are solved with the features of the independent claims. Further advantageous embodiments are described in the dependent claims.

According to an aspect of the present invention, there is provided a secured monetary value token wallet for a monetary value token transaction system, wherein the secured monetary token value wallet is adapted to receive a monetary value token from a user wallet of the monetary value token transaction system in an offline transaction and to store the monetary value token. The secured monetary token value wallet is adapted to store transaction information for the offline transaction in a transaction information history. Further the secured monetary token value wallet is adapted to redeem the token.

The secured monetary value token wallet is limited to using the received monetary value token by either redeeming the received monetary value token or sending the received monetary value token (or a monetary token derived therefrom) to only selected user wallets. The selected user wallets are stored in the transaction information history.

The present approach leads to the following multiple advantages. Due to the usage limitation the received monetary value token in a subsequent transaction can not be redirected to a scammer wallet in a man-in-the-middle attack. Due to the usage limitation the received monetary value token is secured, since other wallets are excluded, such that even local attacks do not succeed. The usage limitation also allows to use a static holding limit and/or a rather high holding limit, which are easier to manage. Finally, the conventional holding limit may now even be handled separately, as it will be described in more detail below.

In variants the secured monetary value token wallet is adapted to at least partially or fully encrypt the received token with an external target key, in particular an external redemption target key and/or an external user wallet key. Preferably the secured monetary value token wallet is adapted to store and optionally to receive the monetary value token as a target encrypted monetary value token, in particular as a redemption target encrypted monetary value token and/or a user wallet encrypted monetary value token.

The monetary value token thus is target encrypted. Since the secured monetary value token wallet can not decrypt the encrypted token/does not have a decryption key required for decryption, the usage limitation to the target is ensured/improved. Neither could the encrypted token be misused inside or outside the secured monetary value token wallet.

The secured monetary value token wallet may store one ore more allowed redemption targets, preferably only one or more redemption target identifiers. Accordingly, the wallet will redeem the received token only via the allowed redemption target(s). Each redemption target (server/service) may have a unique redemption target identifier. For a redemption unit of the secured monetary value token wallet this is a further limitation (to the stored redemption targets from all existing redemption targets). For example, multiple redemption server may exist and only the one or the two or more stored redemption servers would be allowed. For a sending unit of the secured monetary value token wallet this forms two limitations: first the target has to be a redemption target and second it must be the allowed redemption target.

For redeeming the received monetary value token the secured monetary value token wallet preferably checks if a certificate data element (of the certificate of the target) identifies a target to be a redemption target. Accordingly, any redemption target would be allowed or in addition to the above limitation to allowed redemption targets, the certificate is checked (to confirm the property of being a redemption target). For example, the redemption target identifier may be a data element of the certificate and at least one bit in the identifier indicates the target to be a redemption target (bit=0: no redemption target, bit=1: redemption target). Of course, also multiple bits may be used for coding the type (user/redemption/bank/present wallet) of the target (e.g.: 0001 for user wallet; 0010 for redemption target; and optionally 0011 for secured monetary value token wallets and/or 0100 for bank wallet).

The present usage limitation of the secured monetary value token wallet may also be referred to as a purpose limitation, a target limitation or a combined purpose and target limitation (for the monetary value tokens) of the secured monetary value token wallet. The received tokens of the secured monetary value token wallet may only be used for the purposes of either resending or redeeming. Only redemption targets or the selected user wallets are allowed targets for monetary value tokens of the secured monetary value token wallet.

In preferred variants, the transaction information history for a previous offline transaction comprises at least a user wallet identifier and optionally a monetary value. Typically, the transaction information history comprises multiple transaction history records/ one transaction history record per transaction. The secured monetary value token wallet may also store a link between the transaction history record and the stored received monetary value token, e.g. as a further optional data element of the transaction information history. A unique user wallet number or a user wallet public key may be used as the user wallet identifier. The secured monetary value token wallet may check if the user wallet identifier of the current offline transaction is included in the transaction information history (no transaction if not).

Generally, the standard transaction information history may be used. However, the standard transaction information history may be deleted, once it was sent to a transaction history server of the monetary value token system, and/or it may comprise many further data elements not required for the present solution. Hence, the transaction information history may be a dedicated resending transaction information history. It thus could be smaller and kept longer within the secured wallet (than the bigger standard transaction information history). The records of the dedicated resending transaction information history may be e.g. limited to the user wallet identifier as well as a token link and/or a monetary value.

The monetary value token received from a first user wallet or a monetary value token derived (only) from the received monetary value token may be sent back to the first user wallet included in the transaction information history.

In other variants the received monetary value token received from a first user wallet or a monetary value token derived therefrom - in a second transaction - is sent to a second user wallet included in the transaction information history. The monetary value of the monetary value token in the second transaction is limited to the monetary value stored in the transaction information history for the previous transaction of the second user wallet. Accordingly, resending remains possible regardless of the token of the previous transaction, which might have been redeemed already. The token (or its derivation) received from the first user is sent to the second user. The secured monetary value token wallet checks the monetary value of the previous transaction for the current sending. It thus ensures that the monetary value of the second transaction is equal or below the monetary value of the previous transaction of the current (second) user wallet.

The secured monetary value token wallet typically comprises a reception unit for receiving monetary value tokens and a storage area for storing received monetary value tokens. The reception unit may additionally store the transaction information history (record of the offline transaction) and/or target encrypt the received monetary value token (or control these steps). Additionally, a history management unit and/or an encryption unit may exist in the wallet, which may perform these steps. The (secured monetary value token) wallet may comprise a history storage area (in addition to the token storage area). The history storage area may store the (dedicated) transaction information history (or the standard transaction information history). In variants the (dedicated resending) transaction information history is stored together with the received token in the token storage area.

In preferred variants the secured monetary value token wallet comprises a sending unit which is limited to targets being either a redemption target or a selected user wallet. These variants for example allow to configure a wallet more easily. In a production step of the wallet (before issuance of the wallet to the wallet owner - e.g. user or commercial entity) the target limitation may be added (by adding target data). Hence, a general wallet may be configured by adding limitation data (including target data and optionally at least one holding limit) to become a secured monetary token value wallet or a user wallet.

The secured monetary value token wallet will typically comprise a resending unit for sending a received monetary value token or a token derived therefrom only to a user wallet (their wallet identifier being) included in the transaction information history. The resending unit may also check the monetary value of the previously received token (to resend at most the received monetary value).

The secured monetary value token wallet may comprise a redeeming unit for redeeming a monetary value token. In variants in which the secured monetary value token wallet comprises the redeeming unit and a resending unit exists, no sending unit or a deactivated sending unit may exist.

In the monetary value token transaction system user wallets send monetary value tokens received in an offline transaction to another user wallet in a subsequent offline transaction. The monetary value token transaction system is configured to allow the sending of received monetary value tokens between (user) wallets. This ability is a major advantage achievable with monetary value tokens. For the secured monetary value token wallet however, the usage of received tokens is limited.

For redeeming the monetary value token may be sent to a redemption target. The redemption target transfers the monetary value of the monetary value token into an online system for the owner of the secured monetary value token wallet. Preferably, the monetary value is transferred to an account of the owner or to a wallet of the owner in the online system. The online system may be a bank account system, in which the monetary value is booked into the bank account, or a credit card system, in which the monetary value is booked into the credit card account, or a separate token-based or account-based or blockchain-based digital money (or digital currency) system, in which the monetary value is stored in the respective form. In particular the online system may be an online subsystem of a digital money system, the digital money system further comprising the monetary value token transaction system as an offline subsystem.

A monetary value token typically comprises one or more of the following data elements: a value data element, a token individual secret, preferably a secret key of a key pair, a token reference, preferably derived from the token secret and/or a public key of a (the) key pair, and possibly a token issuer information. The offline transaction may be referred to as an offline payment transaction. Exchanging a monetary value token in a (online or offline) transaction constitutes a payment transaction (since the exchange transfers the monetary value of the monetary value token).

The monetary value token transaction system preferably comprises one or more token issuers and/or a token (reference) register. A token reference register includes token references (but not the tokens). For example WO 2021/170646 A1, WO 2023/011758 A1, WO 2023/011761 A1 and WO 2024/027869 A1 show details of possible monetary value tokens and/or monetary value token transaction systems. The derivation of a token may for example be implemented based on the splitting, merging or switching of tokens described herein.

According to another aspect of the present invention there is provided a user (monetary value token) wallet comprising a holding limit for the monetary value in the wallet of monetary value tokens exchangeable with other monetary value token wallets of the monetary value token system. The user wallet further comprises a redemption limit for the monetary value of monetary value tokens in the user wallet having a usage limitation to a redemption target. Generally, the additional redemption limit increases the monetary value which can be stored in the user wallet. In the monetary value token system the additional redemption limit allows to reduce the holding limit/ to select a holding limit increased by the redemption limit for user wallets. The redemption limit may be lower than the holding limit (it adds monetary value anyway). Preferably however, the redemption limit is higher or equal to the holding limit. In particular the ratio of the redemption limit to the holding limit may be between 0,5 and 10, more preferably between 1 and 10, and even more preferably between 2 and 10. It is particularly advantageous that the redemption limit may be a static (and general) limit. Complex user dependent (not general) and/or dynamic (not static) limit management thus can be avoided. It may be noted that user wallets at first sight rarely receive monetary value tokens. Furthermore it should be noted that the conventional definition of the holding limit was changed. The above holding limit now does not refer to the monetary value of all tokens anymore.

According to still another aspect of the present invention there is provided a monetary value token transaction system, comprising a plurality of user wallets configured to exchange monetary value tokens offline, including monetary value tokens received offline. The user wallets may be adapted as described above. The monetary value token transaction system further comprises one or more secured monetary value token wallets as described above and one or more redemption targets. Optionally the monetary value token transaction system further comprises a token register, preferably a token reference register, and/or one or more token issuer (server).

The monetary value token transaction system may comprise user wallets (owner = end user) and commercial wallets (owner = commercial entity), preferably both being adapted to exchange (send or receive) a monetary value token in an offline transaction and optionally in an online transaction. Wallet hosting service provider (server) may exist in the monetary value token transaction system. The wallet hosting service provider may comprise multiple hosted wallets of different owners, in particular hosted user wallets and/or hosted commercial wallets. Hosted wallets would be adapted to exchange (send or receive) a monetary value token in an online transaction. The monetary value token transaction system may also comprise wallet devices, particularly including dedicated wallet devices (or wallet secure elements) and device-based wallets. Smart cards, USB sticks, secure RFID- or NFC-tokens or secure BLE-tokens are examples of traditional dedicated wallet devices. They do not include a network interface (internet or mobile communication interface) themselves. They may use external devices (such as smart phone, terminal, computer ...) having a network interface. Device-based wallets may be implemented in devices, like smart phones, smart wearables, portable computers or IoT devices. Preferably they are executed in a secure element or secure execution environment of the device, like SIM, eSIM, TPM, secure SD card or trusted execution environment.

The secured monetary value token wallet apparently is not a hosted wallet (offline transactions). It could be referred to as a wallet device (secured monetary value token wallet device).

The secured monetary value token wallet preferably is a commercial wallet. The owner of the commercial wallet accordingly may be a commercial entity, such as a merchant or a company.

The secured monetary token wallet may comprise a, preferably static, redemption limit for the monetary value of monetary value tokens in the user wallet. A holding limit for monetary value tokens exchangeable with other user wallets is not required (implicitly is zero) or explicitly is zero in the secured monetary token wallet.

Finally, an overall (or general) system comprises the monetary value token transaction system described above and the online system, preferably an online account system or an online wallet system, as also described above.

In the following, the invention or further embodiments and advantages of the invention are explained in more detail based on drawings, wherein the drawings describe only some of the possible embodiments of the invention. At least elements drawn with dashed lines are considered as optional elements.

The drawings are not to be regarded as true to scale, and individual elements of the drawings may be shown in exaggeratedly large or exaggeratedly simplified form.
Fig. 1 shows a secured monetary value token wallet of a monetary value token transaction system in a first variant; and
Fig. 2 shows a secured monetary value token wallet of a monetary value token transaction system in a second variant.

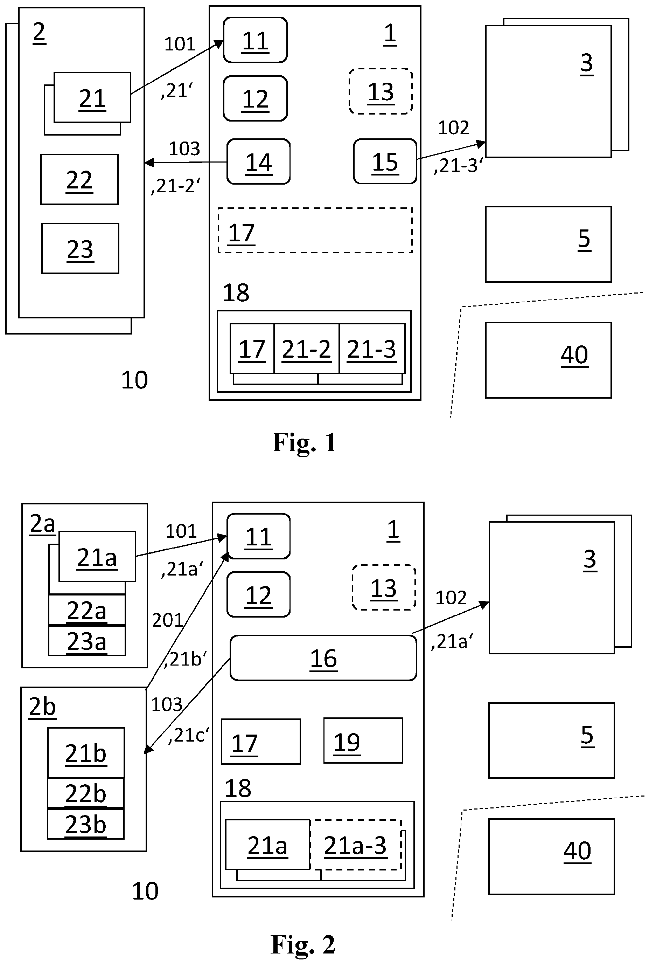

Fig. 1 illustrates a secured monetary value token wallet 1 of a monetary value token transaction system 10. The monetary value token transaction system 10 further comprises user wallets 2 and a at least one redemption target server 3.

The transaction system 10 illustrated also comprises a token (reference) register 5 and may comprise additional central servers/services, which are nor illustrated here. For example, one or more wallet hosting servers for hosting multiple hosted wallets of different users, a transaction information server for receiving (from wallets of the system) and storing transaction information records of monetary value token transactions in the transaction system and/or a limit management server for remotely managing the holding limit of wallets 1,2 of the transaction system 10 may exist.

The user wallets 2 of the transaction system 10 are adapted to store and exchange (send or receive) monetary value tokens, at least in (local) offline transactions and optionally in online transactions. A monetary value token received in an offline transaction may be send to another user wallet 2 (or secured monetary token wallet 1) in another offline transaction.

The secured monetary value token wallet 1 receives 101 a monetary value token 21 from a user wallet 2 of the monetary value token transaction system 10 in an offline transaction and to store the monetary value token 21. The secured monetary token value wallet 1 stores transaction information for the offline transaction in a transaction information history 17. Furthermore, the secured monetary token value wallet can redeem 102 the received monetary value token 21 in the monetary value token transaction system 10.

The secured monetary value token wallet 1 is limited to using the received monetary value token 21 by either redeeming 102 the received monetary value token or sending 103 the received monetary value token 21 (or a monetary token derived therefrom) to only selected user wallets, wherein the selected user wallets are stored in the transaction information history 17.

In the example illustrated in Fig. 1 a target encryption is used to limit the usage of the received monetary value token 21. The monetary value token 21 is stored in a target encrypted form. A redemption target encrypted token 21-3 and a user wallet encrypted token 21-2 is stored in the secured monetary value token wallet 1. Since the token 21-2, 21-3 is target encrypted, only the target - a redemption server 3 for redemption target encrypted token 21-3 and the user wallet 2 for user wallet encrypted token 21-2 - is able to decrypt the token. In particular the secured monetary value token wallet 1 cannot decrypt the target encrypted token 21-2, 21-3. Preferably, also other user wallets of the transaction system 10 cannot decrypt the target encrypted token 21-2, 21-3.

The monetary value token 21 may be fully or partially encrypted. A token may comprise token data elements, such as a token individual secret, a monetary value and one or more optional other token data elements, e.g. token issuer or token reference. All token data elements of a monetary value token could be encrypted (fully encrypted). Alternatively, one or more of the token data elements, preferably a token individual secret, are encrypted and at least one token data element, preferably a monetary value and/or a token reference, remains unencrypted (partially encrypted). For example, only the token individual secret may be encrypted and the monetary value and/or the optional other token data elements may remain unencrypted. When partially encrypting only one or more token individual data elements, the encrypted token basically can be handled like an unencrypted token (in the steps of sending or redeeming).

A reception unit 11 of the secured wallet 1 may receive the monetary value token 21. It could optionally also perform the encryption and/or the storing of the (target encrypted) token and/or the recording of the transaction information history 17. A separate encryption unit 12 and/or a history information management unit 13 may alternatively be used. The secured monetary value token wallet 1 typically stores at least one (or both) of the target encryption keys (not allowing decryption), particularly the redemption target encryption key, but may receive in the transaction one or both target encryption keys, preferably the user wallet encryption key. The target encryption keys preferably are pubic keys (from a public/private key pair). For example, the secured monetary value token wallet 1 may receive the (public) target encryption key of the other user wallet 2 from the other user wallet 2. The other user wallet 2 comprising a corresponding decryption key 23, preferably the private key of (a key pair including the private key and) the received public target encryption key. The target encryption key of the other user wallet 2 is preferably received in a preparation of the step of receiving 101 the monetary value token from the other user wallet 2, in particular within a mutual authentication step.

A token storage area 18 of the secured monetary value token wallet 1 thus comprises one or more monetary value tokens 21 received in at least one or multiple offline transactions 101 from one or more user wallets 2. In the illustrated example the monetary value tokens are stored in a target encrypted form. Accordingly, one or more received monetary value tokens 21 are each stored in a user wallet encrypted form and/or in a redemption target encrypted form.

As indicated in Fig. 1 the transaction information history 17 may be stored in the token storage area 18. For example, the token storage area 18 may comprise one record per offline transaction, the record including the received (target encrypted) monetary value token 21 and the transaction information of the offline transaction. Alternatively, the transaction information history 17 is stored separately.

The secured monetary value token wallet 1 may send 103 the received monetary value token 21 to a selected user wallet 2, in Fig.1 in the stored target encrypted form, e.g. by re-sending unit 14 of the token wallet 1. The user wallet encrypted token 21-2 is received in the user wallet 2, which comprises a token decryption key 23 for decrypting the user wallet encrypted token 21-2. Before sending the received monetary value token 21 back to the user wallet, the secured monetary value token wallet 1 checks the transaction information. Only if the current user wallet corresponds to the user wallet of the recorded offline transaction, the stored user wallet encrypted token 21-2 is send.

The transaction information stored preferably comprises a user wallet identifier 22 of the user wallet 2. The user wallet identifier 22 may be a wallet identification number of the user wallet 2 or a user wallet public key of the user wallet 2, possibly in combination with a transaction individual data element, such as a transaction sequence number or a token reference. However, a unique number (generated in the transaction), such as a transaction number, may also be used as the user wallet identifier 22. If the user wallet identifier 22 is stored together with the stored (target encrypted) monetary value token 21-2, 21-3, no further data would be required. If however the user wallet identifier of the second/subsequent transaction does not correspond to a stored user wallet identifier, no monetary value token is send (even though externally requested).

If the transaction information history is stored separately, the transaction information would comprise at least a link to the stored token or the token reference of the stored token. Generally, a normal transaction log file may be re-used as the transaction information history 17. Since these transaction log files are typically deleted or compacted early, due to storing too many data elements, they may not be available. Hence, a dedicated transaction information history 17 (within or separate from token storage 18) is preferably used. Preferably, the dedicated transaction information history 17 is stored in a record of the token storage 18 comprising the transaction information history 17 and the monetary value token 21, 21-2-21-3. The transaction information history 17 could be provided in addition to a transaction log file.

The secured monetary value token wallet 1 may redeem 102 the received monetary value token 21. The redemption target encrypted token 21-3 is provided to redemption target server 3, e.g. by redemption unit 15 of the secured wallet 1.

The monetary value token 21 is received (in the redemption target encrypted - and thus decryptable - form) in the redemption target 3. Multiple redemption targets 3 may exist in the system 10. For the owner of the secured monetary value token wallet 1 the redemption target 3 transfers the monetary value of the monetary value token 21 into an online system 40, preferably to an account of the owner or a wallet of the owner in the online system 40. The online system 40 allows to transfer monetary values in online transactions, preferably between the accounts or wallets of the online system 40. In the general system the systems 10, 40 are separate systems. With respect to the monetary value token system 10, the online system 40 could be an independent system or an online subsystem of a general system comprising the online system 40 as the online subsystem and the monetary value token system 10 and as an offline subsystem.

The user wallets 2 may comprise a holding limit (not shown) for the monetary value of the tokens stored. The holding limit can be dynamic (or static). The holding limit (static holding limit or maximum dynamic holding limit) may be a standard user wallet holding limit in the monetary value token system 10. The standard user holding limit (exemplary only: 400) applies for all user wallets 2 in the monetary value token system 10. For the tokens stored in the token storage area 18 of the secured monetary value token wallet 1, a (target restricted) limit significantly (at least two times, preferably more than five times) higher than the standard user wallet holding limit may be defined. The user wallets 2 may additionally comprise a redemption limit for the monetary value in the wallet of monetary value tokens having a usage limitation to a redemption target, wherein preferably the ratio between redemption limit and holding limit is between 0,5 and 10 and/or the redemption limit is a static limit.

The token register 5 may be implemented and used as described in EP 3 671 514 B1, WO 2020/212331 A1, WO 2021/170646 A1, WO 2023/011758 A1 or WO 2023/011761 A1. Preferably, the token register 5 is a token reference register only storing token references but not tokens, registering token references of valid tokens and/or receiving token reference replacement requests from wallets 1, 2 of the monetary value token system 10 (to replace one or more registered token reference by one or more token references to be registered in the token reference register).

The secured monetary value token wallet 1 is preferably owned by a commercial entity, such as a merchant, and/or preferably is a local wallet device, such as a terminal. The monetary value token system 10 preferably is a central bank digital currency system and/or comprises a central bank server of the central bank being the issuer of the digital monetary value token.

In a variant (not shown), the secured monetary value token wallet 1 already receives in step 101 at least one of the target encrypted tokens 21-2, 21-3, preferably the user wallet encrypted token 21-2, (and/or the target encryption key). The target encrypted token 21-2 (or 21-3) may be received in addition to the monetary value token 21 or both target encrypted tokens 21-2, 21-3 may be received.

Fig. 2 illustrates another secured monetary value token wallet 1 of a monetary value token transaction system 10. Since primarily the limitation for the received monetary value tokens in secured monetary value token wallet 1 is differently achieved, it can be referred to Fig. 1 for all other aspects of the systems 10, 40 and/or the system components 1, 2, 3 and 5. Hence, description of the other aspects already described above is omitted.

In the example illustrated in Fig. 2 two user wallets 2a, 2b are shown. In a first offline transaction user wallet 2a sends 101 a monetary value token 21a to the secured monetary value token wallet 1. In a second offline transaction user wallet 2b sends 201 a monetary value token 21b to the secured monetary value token wallet 1. The received monetary value tokens 21a, 21b are stored in the token data storage area 18. One history information record is recorded for each offline transaction in transaction information history 17 (separately provided). The history information record comprises a user wallet identifier 22a, 22b and the monetary value of the received monetary value token 21a, 21b.

The secured monetary value token wallet 1 is limited to send the received monetary value token 21a, 21b or a token derived from the received monetary value tokens 21a, 21b to the selected user wallets 2a, 2b included in the transaction information history 17. The secured monetary value token wallet 1 preferably comprises a token sending unit 16. The token sending unit 16 may be a normal sending unit (as implemented in the user wallets) but it is limited to only send to the selected user wallets or to redemption targets. The secured monetary value token wallet 1 may resend the monetary value token 21a, 21b received from the user wallet 2a, 2b to the corresponding user wallet 2a, 2b. The secured monetary value token wallet 1 may however send the monetary value token 21a, 21b received from a (first) user wallet 2a, 2b to a (second) selected user wallet 2b, 2a. If it is determined that the second user wallet 2b, 2a presents his user wallet identifier, which is stored in the transaction information history 17, the secured monetary value token wallet 1, e.g. by means of the token sending unit 16, may send a (received or derived) token to this selected user wallet. The monetary value of the monetary value token is equal or less than the monetary value recorded in the history information record. The secured monetary value token wallet 1, preferably the token sending unit 16 (also), checks this condition. It either uses a stored received monetary value token or it derives a new token of the desired monetary value.

Token derivation is basically described in WO 2020/212331 A1, WO 2021/170646 A1, WO 2023/011758 A1 or WO 2023/011761 A1. It typically comprises (value-neutral) generation of one ore more new tokens based on stored tokens. A token of a desired monetary value can be generated, as long as the overall monetary value of the generated token(s) and the overall monetary value of the stored token(s) is equal. The token derivation preferably further comprises generating a replacement request for the token reference register, requesting replacement of the token reference(s) of the stored token(s) by the token reference(s) of the new token(s). The token reference register replaces the token references, if the registered monetary value is not changed thereby.

Fig. 2 shows the example of a derived token 21c, derived from one or more received token(s) 21a, being sent 103 to the second user wallet 2b.

As further indicated in Fig. 2 the secured monetary value token wallet 1 may store one or more allowed redemption targets 19. For redeeming 102 the secured monetary value token wallet 1 would be limited to the allowed redemption targets. For example, the secured monetary value token wallet 1 stores two redemption target identifiers of redemption targets 3. Thus for redeeming 102 one of both redemption targets may be used, whereas other redemption targets may not be used. The secured monetary value token wallet 1, preferably the token sending unit 16, checks if the redemption target is an allowed redemption target before redeeming. In an alternative approach the secured monetary value token wallet 1, preferably the token sending unit 16, checks based on a certificate data element of the certificate of a target, if the target is a redemption target. Within an identifier of the redemption target, e.g. the wallet identification number, one or more bits code, if the entity is a redemption target. The same bits may be used to indicate a user wallet and/or a secured wallet. In this approach any redemption target may be used for redeeming the received monetary value token.

In the example of Fig. 2 a target limitation is used for user wallets, the selected wallets in the transaction information history 17, and redemption targets, e.g. the allowed redemption targets or redemption targets as such. As indicated by the optional storage of redemption target encrypted token 21a-3, the limitations can be combined. Hence, for example selected wallets and/or allowed targets and/or one or both target encrypted token(s) may exist.

### REFERENCE SIGNS

- 1: secured monetary value token wallet
- 11: token reception unit
- 12: token encryption unit
- 13: history management unit
- 14: token resending unit
- 15: token redemption unit
- 16: token sending unit
- 17: transaction information history
- 18: token storage area
- 19: allowed redemption target

- 2, 2a, 2b: user monetary value token wallet
- 21, 21a, 21b, 21c: monetary value token
- 22, 22a, 22b: wallet identifier
- 23, 23a, 23b: token decryption key
- 21-2: user wallet encrypted token
- 21-3, 21a-3: redemption target encrypted token

- 3: token redemption server
- 5: token reference register
- 10: monetary value token system
- 40: online account system

- 101, 201: token reception in offline transaction
- 102: token redeeming
- 103: resending token to user wallet

## Claims

1. Secured monetary value token wallet (1) for a monetary value token transaction system,
wherein the secured monetary token value wallet (1) is adapted to receive (101) a monetary value token (21; 21a) from a user wallet (2; 2a) of the monetary value token transaction system in an offline transaction and to store the monetary value token (21; 21a);
wherein the secured monetary token value wallet (1) is adapted to store transaction information for the offline transaction in a transaction information history (17);
wherein the secured monetary token value wallet (1) is adapted to redeem (102) the received monetary value token;
**characterized in that**
the secured monetary value token wallet (1) is limited to using the received monetary value token by either redeeming the received monetary value token or sending the received monetary value token (21; 21a) or a monetary token (21b) derived therefrom to only selected user wallets (2; 2b), wherein the selected user wallets (2; 2b) are stored in the transaction information history (17).

2. The secured monetary value token wallet of claim 1, **characterized in that** the secured monetary value token wallet is adapted to at least partially or fully encrypt the received token with an external target key, in particular an external redemption target key and/or an external user wallet key.

3. The secured monetary value token wallet of one of the preceding claims, **characterized in that** the secured monetary value token wallet is adapted to store and optionally to receive the monetary value token as a target encrypted monetary value token, in particular as a redemption target encrypted monetary value token and/or a user wallet encrypted monetary value token.

4. The secured monetary value token wallet of one of the preceding claims, **characterized in that** the secured monetary value token wallet stores one ore more allowed redemption targets, preferably only one or more redemption target identifiers.

5. The secured monetary value token wallet of one of the preceding claims, **characterized in that** for redeeming the received monetary value token the secured monetary value token wallet is adapted to check if a certificate data element identifies a target to be a redemption target.

6. The secured monetary value token wallet of one of the preceding claims, **characterized in that** the transaction information history for a previous transaction comprises at least a user wallet identifier and/or a monetary value.

7. The secured monetary value token wallet of one of the preceding claims, **characterized in that** the monetary value token received from a first user wallet or a monetary value token derived therefrom is sent back to the first user wallet included in the transaction information history.

8. The secured monetary value token wallet of one of the preceding claims, **characterized in that** the received monetary value token received from a first user wallet or a monetary value token derived therefrom in a second transaction is sent to a second user wallet included in the transaction information history, wherein the monetary value of the monetary value token in the second transaction is limited to the monetary value stored in the transaction information history for the previous transaction of the second user wallet.

9. The secured monetary value token wallet of one of the preceding claims, **characterized in that** the secured monetary value token wallet comprises
- a reception unit (11) for receiving monetary value tokens;
- a storage area (18) for storing monetary value tokens; and optionally
- a redeeming unit (15) and/or a resending unit (14).

10. The secured monetary value token wallet of one of the preceding claims, **characterized in that** the secured monetary value token wallet comprises
- a sending unit (16) limited to targets being either a redemption target or a selected user wallet; or
- a redeeming unit (15), a resending unit (14) and no sending unit or a deactivated sending unit (16).

11. The secured monetary value token wallet of one of the preceding claims, **characterized in that**
- user wallets (2; 2a, 2b) of the monetary value token transaction system in a subsequent offline transaction send monetary value tokens received in offline transactions; and/or
- the secured monetary value token wallet comprises a target limit for the monetary value in the secured monetary value token wallet of monetary value tokens having a usage limitation to a redemption target.

12. The secured monetary value token wallet of one of the preceding claims, **characterized in that** the monetary value token (21; 21a, 21b) is send to a redemption target (3) such that the redemption target (3) transfers the monetary value thereof into an online system (40) for the owner of the secured monetary value token wallet (1), preferably to an account of the owner or a wallet of the owner in the online system (40).

13. A user monetary value token wallet (2) comprising
- a holding limit for the monetary value in the wallet of monetary value tokens exchangeable with other monetary value token wallets of the monetary value token system; and
- a redemption limit for the monetary value in the wallet of monetary value tokens having a usage limitation to a redemption target;
wherein preferably the ratio between redemption limit and holding limit is between 0,5 and 10 and/or the redemption limit is a static limit.

14. A monetary value token transaction system (10), comprising:
- a plurality of user wallets (2; 2a, 2b) configured to exchange monetary value tokens (21; 21a, 21b) offline, including monetary value tokens received offline, preferably according to claim 13;
- one or more secured monetary value token wallets (1) according to one of claims 1 to 12;
- one or more redemption targets (3); and
- an optionally a token register (5), preferably a token reference register.

15. An overall system comprising the monetary value token transaction system according to claim 14 and an online system (40), preferably an online account or online wallet system.
